# EUROPÄISCHE PATENTSCHRIFT

(11) **EP 1 447 587 B1**
(45) Veröffentlichungstag und Bekanntmachung des Hinweises auf die Patenterteilung: **02.11.2006**
(21) Anmeldenummer: 04001137.1
(22) Anmeldetag: 21.01.2004
(51) Int. Cl.: F16D 66/00, F16D 65/12, F16D 66/02

(54) **Bremsscheibe sowie Messeinrichtung zur Verschleissmessung der Bremsscheibe**
Brake disc and measuring device for brake disc wear measurement
Disque de frein et un système de mesure de l'usure d'un disque de frein

(30) Priorität: 22.01.2003 DE 20300939 U
(43) Veröffentlichungstag der Anmeldung: 18.08.2004
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Mosbach, Christian, Dr., 82110 Germering (DE)

(56) Entgegenhaltungen:
- EP-A- 0 133 526
- EP-A- 0 564 942
- EP-A- 0 809 037
- EP-A- 0 985 845
- DE-C- 19 841 096
- DE-U- 7 729 939

## Beschreibung

Die vorliegende Erfindung betrifft ein Verfahren zur Ermittlung des Verschleißes einer Bremsscheibe, die an eine Achse oder ein Rad eines Fahrzeuges, vorzugsweise eines Schienenfahrzeuges, anschließbar ist sowie eine Messeinrichtung zur Verschleißmessung der Bremsscheibe.

Zur Feststellung eines betriebsbedingten Verschleißes der ringförmigen Bremsscheibe, insbesondere zur Erkennung eines notwendigen Austausches ist am Außenumfang der Bremsscheibe ein stufenförmiger Absatz vorgesehen, der eine Verschleißmarkierung bildet und dessen Tiefe, in axialer Richtung gesehen, das zulässige Verschleißmaß wiedergibt.

Aufgrund der im Betrieb auftretenden hohen thermischen Belastung ergibt sich vielfach eine plastische Deformation der Bremsscheibe, die zu einer muldenförmigen Verformung der Reibfläche der Bremsscheibe führt.

Darüber hinaus führt die Verwendung genormter Bremsbeläge zu einem ungleichmäßigen, nicht planen Verschleiß der Reibflächen, wobei sich ebenfalls eine muldenförmige Verformung ergibt, durch die der Erkennungswert der Verschleißmarkierung praktisch unbrauchbar ist.

In diesem Fall ist das tatsächliche Verschleißmaß, das durch die Muldentiefe gegeben ist, nicht mit dem Verschleißmaß identisch, das durch die im Außenrandbereich der Bremsscheibe verlaufende Verschleißmarkierung erkennbar ist.

Naturgemäß kann diese Fehlinformation Konsequenzen für das Betriebsverhalten der Bremsscheibe haben, d. h., sie wird unter Umständen aufgrund des Verschleißes über das zulässige Maß hinaus die ihr zugewiesene Funktion nicht im gewünschten Umfang erfüllen können.

Aus der EP 0 809 037 A2 ist eine ringförmige Bremsscheibe bekannt, die auf ihrer Außenseite am Innen- und Außenumfang jeweils eine Stufe für einen stufenförmigen Absatz aufweist. Diese stufenförmigen Absätze zur Verschleißerkennung zu nutzen, ist aus dieser Literatur jedoch nicht bekannt.

In der DE 198 41 096 C1 ist eine Bremsscheibe gezeigt und beschrieben, die am Außen- und Innenumfang jeweils eine umlaufende Verschleißmarkierung in Form eines stufenförmigen Absatzes aufweist, wobei die Verschleißerkennung jedoch ausschließlich visuell erfolgt. Je nach Veränderung der Tiefe kann auf den Verschleiß der Bremsfläche geschlossen werden, bis hin zu einer Abnutzung, bei der kein stufenförmiger Absatz mehr besteht, sondern ein flächenbündiger Übergang zur Reibfläche.

Eine solche visuelle Verschleißerkennung ist ebenfalls aus der EP A 0 985 845 bekannt.

Der vorliegenden Erfindung liegt die Aufgabe zugrunde, ein Verfahren der gattungsgemäßen Art sowie eine Messeinrichtung zu entwickeln, mit denen eine zuverlässige und den Gegebenheiten entsprechende Verschleißfeststellung auf einfache Art und Weise möglich ist.

Diese Aufgabe wird durch ein Verfahren gelöst, das die Merkmale des Anspruchs 1 aufweist bzw. durch eine Messeinrichtung mit den Merkmalen des Anspruchs 2.

Das erfindungsgemäße Verfahren ermöglicht den Einsatz der Messeinrichtung, mit der unabhängig vom Verschleiß im Bereich der Verschleißmarkierung der größte Verschleiß an der entsprechenden, prinzipiell nicht vorherbestimmbaren Stelle ermittelbar ist.

Vorzugsweise entspricht die zweite Verschleißmarkierung in ihrer Ursprungstiefe der der ersten, wobei die zweite Verschleißmarkierung vorteilhafterweise am inneren Umfang der ringförmigen Bremsscheibe angeordnet ist, und zwar ebenfalls in Form eines stufenförmigen Absatzes.

Die Messeinrichtung zur Verschleißmessung beinhaltet eine Brücke, die an den beiden, vorzugsweise am Außen- und Innenrand der Bremsscheibe vorgesehenen Auflagern anlegbar ist und die in Funktion einen Tiefenmesser trägt.

Dabei verläuft der die beiden Stützen verbindende Brückensteg entsprechend parallel zur Bremsfläche der unbenutzten Bremsscheibe, so daß der Brückensteg prinzipiell eine Parallelverschiebung dieser Bremsfläche darstellt.

Der Brückensteg bildet eine Auflage für einen Tiefenmesser, beispielsweise eine Tiefenlehre, mit dem die Tiefe an jeder Stelle der Bremsfläche ermittelbar ist.

Eine automatische Tiefenmessung kann beispielsweise durch einen an sich bekannten Sensor erfolgen, der auf der Brücke entlanggeführt wird und durch den überdies eine Protokollierung und Auswertung der gemessenen Tiefen erfolgen kann.

In ihrer Länge ist die Brücke so bemessen, daß der aufgesetzte Tiefenmesser die Tiefe der wirksamen Bremsfläche der Bremsscheibe in ihrer gesamten Breite ermitteln kann.

Nach einer vorteilhaften Weiterbildung der Meßeinrichtung ist vorgesehen, die Brückenstützen so auszubilden, daß sie in Funktionsstellung weitgehend spielfrei an den Auflagern anliegen, wozu zum einen eine entsprechende maßliche Abstimmung erforderlich ist und sie zum anderen den durch die Bremsscheibe vorbestimmte Radien angepaßt sind.

Weitere vorteilhafte Ausbildungen der Erfindung sind in den Unteransprüchen gekennzeichnet.

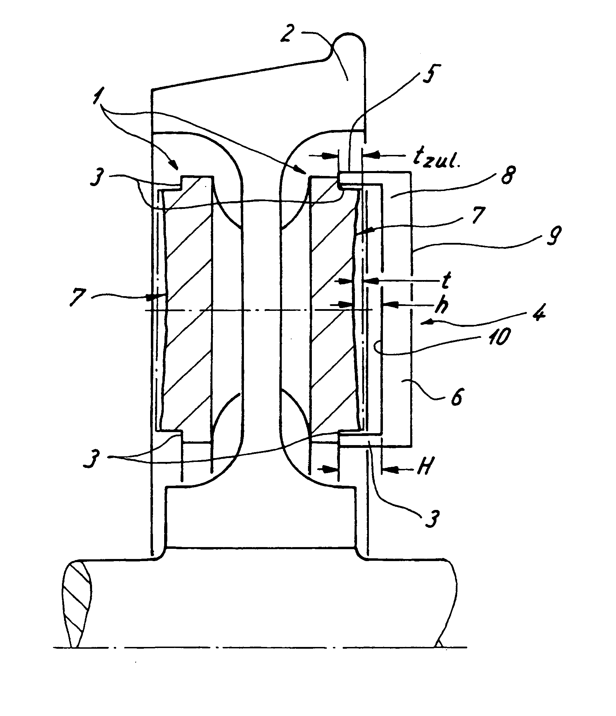

Ein Ausführungsbeispiel sowohl der Bremsscheibe wie auch der Meßeinrichtung wird nachfolgend anhand der beigefügten Zeichnung beschrieben.

Die einzige Figur zeigt einen Teilausschnitt einer montierten Bremsscheibe mit aufgesetzter Meßeinrichtung.

In der Figur ist die an ein Rad 2 eines Fahrzeuges, beispielsweise eines Schienenfahrzeuges, angeschlossene ringförmige Bremsscheibe 1 dargestellt, die zwei gegenüber liegende Bremsflächen 7 aufweist, an deren beiden umfänglichen Randbereichen jeweils ein als Verschleißmarkierung umgebender stufenförmiger Absatz 3 vorgesehen ist.

Diese sich umlaufend erstreckenden Absätze 3 dienen als Auflager für eine Meßeinrichtung 6, mit der eine Verschleißtiefe t feststellbar ist.

Die Absätze 3 können, wie erwähnt, eine Verschleißmarkierung bilden, durch die der maximal zulässige Verschleiß t_{zul} definiert ist. Die strichpunktierte Linie im Bereich jeder Bremsfläche 7 stellt diese in verschleißfreiem Zustand dar, wobei sich der zulässige Verschleiß t_{zul} ebenso wie die Verschleißtiefe t auf diese verschleißfreie Bremsfläche beziehen.

Als Meßeinrichtung ist eine Brücke 4 vorgesehen, deren beide Brückenstützen 5 am Grund der Absätze 3 anliegen. Ein die beiden Brückenstützen 5 verbindender Brückensteg 8 verläuft parallel zu der strichpunktiert dargestellten verschleißfreien Fläche, wobei die der Bremsscheibe 1 zugewandte Unterseite 10 den Bezug zu einem Hilfsmaß H bilden kann, das in einem bekannten Verhältnis zu dem zulässigen Verschleiß t_{zul}, also der ursprünglichen Tiefe der Absätze 3, steht. Ein zweites Hilfsmaß h bezieht sich ebenfalls auf die Unterseite 10 des Brückensteges 8, durch das die Verschleißtiefe t ermittelbar ist, so daß sich die Verschleißtiefe t ergibt aus t = h - (H - t_{zul}).

Als Auflage für einen nicht dargestellten Tiefenmesser, beispielsweise in Form einer Tiefenlehre oder dergleichen, dient die Oberseite 9 des Brückensteges 8, wobei der Tiefenmesser, bezogen auf die Bremsscheibe 1 radial verfahrbar ist.

## Patentansprüche

1. Verfahren zur Ermittlung eines Verschleißes einer ringförmigen Bremsscheibe (1), die am Außenumfang als Verschleißmarkierung einen stufenförmigen Absatz (3) und eine zweite Verschleißmarkierung aufweist, **dadurch gekennzeichnet, dass** seitlich auf die Bremsscheibe (1) auf die ein Auflager bildenden Verschleißmarkierungen eine Messeinrichtung aufgesetzt und die Verschleißtiefe (t) gemessen wird.

2. Messeinrichtung zur Verschleißmessung einer an eine Achse oder ein Rad (2) eines Fahrzeuges, vorzugsweise eines Schienenfahrzeuges anschließbaren ringförmigen Bremsscheibe (1), **dadurch gekennzeichnet, dass** eine Brücke (4) vorgesehen ist, die an zwei, vorzugsweise am Außen- und Innenrand der Bremsscheibe (1) vorgesehenen Auflagern anlegbar ist und die in Funktion einen Tiefenmesser trägt.

3. Messeinrichtung nach Anspruch 2, **dadurch gekennzeichnet, dass** die Brücke (4) radial verschiebegesichert anlegbar ist.

4. Messeinrichtung nach Anspruch 2, **dadurch gekennzeichnet, dass** die beiden Brückenstützen (5) in ihrer Form dem zugeordneten Radius der Bremsscheibe (1) im Bereich der Absätze (3) angepasst sind.

5. Messeinrichtung nach Anspruch 2, **dadurch gekennzeichnet, dass** der Tiefenmesser durch eine Tiefenlehre gebildet ist, die sich an der Außenfläche (9) eines die Brückenstützen (5) verbindenden Brückensteges (8) abstützt.

6. Messeinrichtung nach Anspruch 2, **dadurch gekennzeichnet, dass** der Tiefenmesser durch einen Sensor gebildet ist, mit dem die Verschleißtiefe t ermittelbar ist.

## Claims

1. Method of measuring wear on an annular brake disc (1) comprising a stepped shoulder (3) as wear marker and a second wear marker on the outer periphery, **characterised in that** a measuring system is placed laterally on said brake disc (1) on said wear markers constituting a support, and that the depth of wear (t) is measured.

2. Measuring system for measuring wear on an annular brake disc (1) adapted for being connected to an axle or a wheel (2) of a vehicle, preferably a rail vehicle, **characterised in that** a bridge (4) is provided that is adapted for being laid against two supports provided preferably on the outer and inner edge of said brake disc (1), and that it carries a depth-measuring means in operation.

3. Measuring system according to Claim 2, **characterised in that** said bridge (4) is adapted to be laid whilst it is blocked for radial displacement.

4. Measuring system according to Claim 2, **characterised in that** the shape of the two posts (5) supporting said bridge is adapted to the associated radius of said brake disc (1) in the region of said shoulders (3).

5. Measuring system according to Claim 2, **characterised in that** said depth-measuring means is constituted by a depth gauge supported on the outer surface (9) of a bridge web (8) connecting said bridge posts (5).

6. Measuring system according to Claim 2, **characterised in that** said depth gauge is formed by a sensor adapted to serve for detection of the depth of wear t.

## Revendications

1. Procédé à mesurer l'usure à un disque de frein annulaire (1) comprenant un épaulement à gradins (3) en tant que repère de l'usure et un deuxième repère de l'usure à sa périphérie extérieure, **caractérisé en ce qu'**un système de mesure est placé latéralement audit disque de frein (1) sur lesdits repères de l'usure, qui constituent un appui, et **en ce que** la profondeur de l'usure (t) st mesu rée.

2. Système de mesure à mesurer l'usure à un disque de frein annulaire (1) apte à être raccordé à un essieu ou une roue (2) d'un véhicule, de préférence d'un véhicule sur rails, **caractérisé en ce qu'**un pont (4) est formé, qui est apte à être placé contre deux appuis formés, de préférence, aux bords extérieur et intérieur dudit disque de frein (1), et **en ce qu'**il porte un moyen de mesure de profondeur en service.

3. Système de mesure selon la revendication 2, **caractérisé en ce que** ledit pont (4) est apte à être placé, en étant protégé contre un déplacement radial.

4. Système de mesure selon la revendication 2, **caractérisé en ce que** la forme de deux montants (5) appuyant ledit pont est adaptée au rayon affecté dudit disque de frein (1) dans la zone desdits épaulements (3).

5. Système de mesure selon la revendication 2, **caractérisé en ce que** ledit moyen de mesure de profondeur est constitué par une jauge de profondeur s'appuyant sur la surface extérieure (9) d'un pontet (8) reliant lesdits montants de pont (5).

6. Système de mesure selon la revendication 2, **caractérisé en ce que** ladite jauge de profondeur est constituée par un détecteur apte à être utilisé pour l'établissement de la profondeur de l'usure t.
